(19) Europäisches Patentamt
European Patent Office
Office européen des brevets

(11) Veröffentlichungsnummer: **0 335 234 B1**

(12) **EUROPÄISCHE PATENTSCHRIFT**

(45) Veröffentlichungstag der Patentschrift: **09.12.92**

(51) Int. Cl.$^5$: **C09B 29/042**, D06P 1/18

(21) Anmeldenummer: **89105091.6**

(22) Anmeldetag: **22.03.89**

# (54) Isothiazolazofarbstoffe.

(30) Priorität: **29.03.88 DE 3810643**

(43) Veröffentlichungstag der Anmeldung:
**04.10.89 Patentblatt 89/40**

(45) Bekanntmachung des Hinweises auf die Patenterteilung:
**09.12.92 Patentblatt 92/50**

(84) Benannte Vertragsstaaten:
**CH DE FR GB IT LI**

(56) Entgegenhaltungen:
**EP-A- 0 151 287**
**GB-A- 2 151 651**

(73) Patentinhaber: **BASF Aktiengesellschaft**
**Carl-Bosch-Strasse 38**
**W-6700 Ludwigshafen(DE)**

(72) Erfinder: **Hansen, Guenter, Dr.**
**Alwin-Mittasch-Platz 8**
**W-6700 Ludwigshafen(DE)**
Erfinder: **Lamm, Gunther, Dr.**
**Heinrich-Heine-Strasse 7**
**W-6733 Hassloch(DE)**
Erfinder: **Reichelt, Helmut, Dr.**
**Johann-Gottlieb-Fiechte-Strasse 56**
**W-6730 Neustadt(DE)**
Erfinder: **Schefczik, Ernst, Dr.**
**Dubliner Strasse 7**
**W-6700 Ludwigshafen(DE)**

EP 0 335 234 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue Isothiazolazofarbstoffe der allgemeinen Formel I

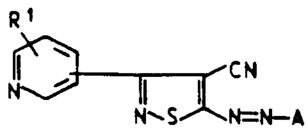

I,

in der $R^1$ Wasserstoff, Halogen, eine $C_1$-$C_4$-Alkyl- oder eine $C_1$-$C_4$-Alkoxygruppe bedeutet und A für den Rest einer Kupplungskomponente steht. Außerdem betrifft die Erfindung die Herstellung der Farbstoffe I, deren Verwendung als Dispersionsfarbstoffe, I enthaltende Farbstoffzubereitungen sowie die den Farbstoffen I zugrundeliegenden Diazokomponenten.

Aus der DE-A-32 05 435 und der DE-A-34 00 364 sind Isothiazolazofarbstoffe des Typs I′

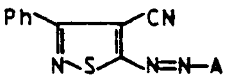

I'

bekannt, wobei Ph eine gegebenenfalls substituierte Phenylgruppe bedeutet.

Die GB-A-2 151 651 betrifft wasserlösliche Monoazofarbstoffe, die sich von einem durch einen Pyridylrest substituierten Thiophenrest als Diazokomponente ableiten und mindestens eine wasserlöslichmachende Gruppe aufweisen.

Der vorliegenden Erfindung lag die Bereitstellung neuer Farbstoffe mit vorteilhaften anwendungstechnischen Eigenschaften als Aufgabe zugrunde.

Demgemäß wurden die eingangs definierten Farbstoffe I gefunden.

Besonders farbstark und von sehr guter Echtheit sind Isothiazolazofarbstoffe der Formel I, in denen die Kupplungskomponente A für einen der folgenden Reste $A^1$ bis $A^5$

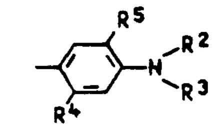

$A^1$

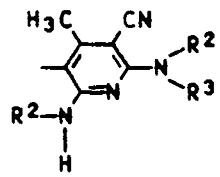

$A^2$

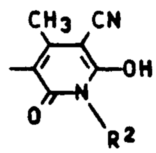

$A^3$

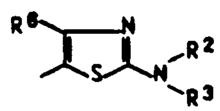

$A^4$

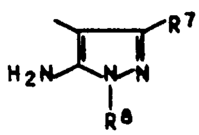

$A^5$

steht, wobei die Substituenten folgende Bedeutung haben können:

- $R^2$, $R^3$ Wasserstoff, $C_1$-$C_{12}$-Alkyl, das durch ein oder zwei Sauerstoffatome unterbrochen sein und/oder ein bis zwei Substituenten aus der Reihe $C_1$-$C_8$-Alkoxycarbonyl, dessen Alkylkette durch ein oder zwei Sauerstoffatome unterbrochen sein kann, Cyano, Hydroxy, $C_1$-$C_4$-Alkanoyloxy, Benzoyloxy oder Phenoxy tragen kann, $C_3$-$C_5$-Alkenyl, $C_5$-$C_7$-Cycloalkyl oder Phenyl, wobei letzteres mit Chlor, Methyl, Methoxy, Dimethylamino oder Acetylamino ein- bis zweifach substituiert sein kann;
- $R^4$ Wasserstoff, $C_1$-$C_4$-Alkyl, $C_1$-$C_4$-Alkoxy oder Chlor, $C_1$-$C_4$-Alkanoylamino, das mit $C_1$-$C_4$-Alkoxy, Phenoxy oder Chlor substituiert sein kann, Ureido, $C_1$-$C_4$-Mono- bzw. Dialkylureido oder $C_1$-$C_4$-Alkylsulfonylamino;
- $R^5$ Wasserstoff, $C_1$-$C_4$-Alkyl, $C_1$-$C_4$-Alkoxy oder Chlor;
- $R^6$ Wasserstoff, $C_1$-$C_9$-Alkyl, Phenyl, Furyl, Thienyl oder Pyridyl, wobei die vier letztgenannten Reste bis zu zwei Methyl-, Methoxy-, Acetylamino- und/oder Dimethylaminogruppen und/oder Chlor tragen können;
- $R^7$ Wasserstoff, $C_1$-$C_4$-Alkyl oder Phenyl;
- $R^8$ Wasserstoff, $C_1$-$C_6$-Alkyl, das ein bis zweifach mit Phenyl, Furyl oder Thienyl substituiert sein kann, $C_5$-$C_7$-Cycloalkyl oder Phenyl.

Reste $R^1$ in Formel I sind beispielsweise Wasserstoff, Methyl, Ethyl, Propyl, Butyl, Methoxy und Ethoxy sowie Fluor, Chlor oder Brom.

Als Reste $R^2$, $R^3$ kommen beispielsweise in Betracht Wasserstoff, Methyl, Ethyl, Propyl, Isopropyl, Butyl, Isobutyl, sec-Butyl, Pentyl, Isopentyl, sec-Pentyl, tert-Pentyl, Hexyl, Heptyl, Octyl, 2-Ethylhexyl,

Allyl, Methallyl, Cyclopentyl, Methylcyclopentyl, Cyclohexyl, Methylcyclohexyl, Cycloheptyl, Benzyl, 1- oder 2-Phenylethyl,

2-Hydroxyethyl, 2-Cyanoethyl, Cyanomethyl, 2-Cyanopropyl, 2-Hydroxypropyl, 1-Methyl-2-hydroxyethyl, 2-Hydroxybutyl, 1-Ethyl-2-hydroxyethyl, 4-Hydroxybutyl, 2-Acetoxyethyl, 2-Propionoyloxyethyl, 4-Acetoxybutyl, 2-Acetoxybutyl, 2-Propionoyloxybutyl, 2-Benzoyloxyethyl, 3-Acetoxypropyl, 2-(4-Methylbenzoyloxy)ethyl, 2-(3-Methylbenzoyloxy)ethyl, 2-Benzoyloxypropyl, 2-Benzoyloxybutyl,

Methoxycarbonylmethyl, Ethoxycarbonylmethyl, Propoxycarbonylmethyl, Butoxycarbonylmethyl, 1-Methoxycarbonylethyl, 2-Methoxycarbonylethyl, 2-Ethoxycarbonylethyl, 2-Propoxycarbonylethyl, 2-Butoxycarbonylethyl, 2-sec-Butoxycarbonylethyl, 2-(2-Ethylhexyloxycarbonyl)ethyl, 2-(2-Methoxyethoxycarbonyl)ethyl, 2-(2-Ethoxyethoxycarbonyl)ethyl, 2-(2-Butoxyethoxycarbonyl)ethyl, 2-Methoxyethyl, 2-Ethoxyethyl, 2-Propoxyethyl, 2-Butoxyethyl, 2-sec-Butoxyethyl, 2-Phenoxyethyl, 2-(4-Acetoxybutoxy)ethyl, 2-Methoxypropyl, 2-Ethoxypropyl, 2-Propoxypropyl, 1-Methyl-2-methoxyethyl, 3-Methoxypropyl, 3-Ethoxypropyl, 3-Butoxypropyl, 3-(2-Methoxyethoxy)propyl, 3-(5-Methoxy-3-oxapentyloxy)propyl, 3-(5-Ethoxy-3-oxapentyloxy)propyl, 3-(4-Hydroxybutoxy)propyl, 3-(4-Acetoxybutoxy)propyl, 6-Phenoxy-4-oxahexyl, 2-Ethoxy-4-oxahexyl oder 3-Benzyloxypropyl, 4-Chlorphenyl, 2-, 3- oder 4-Methylphenyl, 2- oder 4-Methoxyphenyl, 2-Ethoxyphenyl oder 2,4-Dichlorphenyl, 4-Dimethylaminophenyl oder 4-Acetylaminophenyl.

Reste $R^4$, $R^5$ sind beispielsweise Wasserstoff, Chlor, Methyl, Ethyl, Propyl, Isopropyl, Butyl, Isobutyl, sec-Butyl, Methoxy, Ethoxy, Propoxy, Isopropoxy, Butoxy, sec-Butoxy.

Zusätzlich kommen als Reste $R^4$ in Betracht Acetylamino, Propionylamino, Butyrylamino, Isobutyrylamino, Methoxyacetylamino, Ethoxyacetylamino, 2-Chloracetylamino, Phenoxyacetylamino, Benzoylamino, Ureido, Methylureido, Butylureido, N,N-Dimethylureido, Methylsulfonylamino, Ethylsulfonylamino, Propylsulfonylamino oder Butylsulfonylamino.

Einzelne Reste $R^6$ sind z.B. Wasserstoff sowie Alkylreste und substiuiertes Phenyl entsprechend den Beispielen für $R^2$.

Reste $R^7$ sind Wasserstoff, Alkylreste entsprechend den Beispielen für $R^4$ und Phenyl.

Als Reste $R^8$ kommen in Betracht Wasserstoff, Methyl, Ethyl, Propyl, Isopropyl, Butyl, Isobutyl, sec-Butyl, Pentyl, Isopentyl, sec-Pentyl, tert-Pentyl, Hexyl sowie $C_5$-$C_7$-Cycloalkyl entsprechend den Beispielen für $R^2$.

Bevorzugt sind Isothiazolazofarbstoffe der Formel I, in der der Rest $R^1$ Wasserstoff ist.

Beispiele für entsprechende Isothiazolazofarbstoffe sind den nachstehenden Tabellen 1 bis 3 zu entnehmen.

Tabelle 1

allgemeine Struktur:

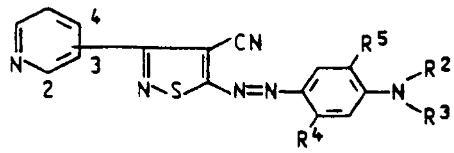

| Beispiel | X [1] | $R^2$ | $R^3$ | $R^4$ | $R^5$ |
|---|---|---|---|---|---|
| 1 | 3 | $C_2H_4CN$ | $C_2H_5$ | $CH_3$ | H |
| 2 | 3 | $C_2H_4CO_2CH_3$ | $C_2H_5$ | H | H |
| 3 | 3 | $C_2H_4OH$ | $C_4H_9$ | $CH_3$ | H |
| 4 | 3 | $C_2H_5$ | $C_2H_5$ | $NHCOCH_3$ | H |
| 5 | 3 | $C_2H_4OCOCH_3$ | $C_2H_5$ | $CH_3$ | H |
| 6 | 3 | $C_2H_4OCOCH_3$ | $C_2H_4OCOCH_3$ | H | H |
| 7 | 3 | $C_2H_5$ | $C_2H_5$ | H | H |
| 8 | 3 | $C_2H_4OCH_3$ | $C_2H_4OCH_3$ | H | H |
| 9 | 3 | $C_2H_4OCOCH_3$ | $C_2H_4OCOCH_3$ | $CH_3$ | H |
| 10 | 3 | $C_2H_4C_6H_5$ | $C_2H_4CN$ | H | H |
| 11 | 3 | $C_2H_4OCOC_2H_5$ | $C_2H_4OCOC_2H_5$ | Cl | H |
| 12 | 3 | $C_2H_4OCOC_2H_5$ | $C_2H_4CN$ | H | H |
| 13 | 3 | $C_2H_4CN$ | $CH_2CH{=}CH_2$ | H | H |
| 14 | 3 | $C_2H_4OCOCH_3$ | $C_2H_4OCOCH_3$ | $CH_3$ | $OCH_3$ |
| 15 | 3 | $CH_2CH{=}CH_2$ | $CH_2CH{=}CH_2$ | $NHCOCH_3$ | $OCH_3$ |
| 16 | 3 | $C_2H_4CO_2C_2H_4OC_2H_5$ | $C_2H_5$ | H | H |
| 17 | 4 | $C_2H_4CN$ | $C_2H_5$ | $CH_3$ | H |
| 18 | 4 | $CH_2C_6H_5$ | $C_2H_4CO_2CH_3$ | H | H |
| 19 | 4 | $C_2H_5$ | $C_2H_5$ | H | H |
| 20 | 2 | $C_2H_4CN$ | $C_2H_5$ | H | H |

[1] X = Stellung der Pyridylgruppe

Tabelle 2

allgemeine Struktur:

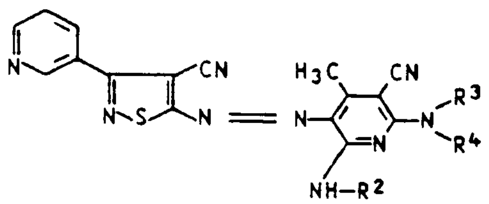

| Beispiel | $R^2$ | $R^3$ | $R^4$ |
|---|---|---|---|
| 1 | H | H | $C_3H_6OC_2H_4OCH_3$ |
| 2 | H | H | $C_3H_6OC_2H_4OC_2H_5$ |
| 3 | H | H | $C_3H_6O(C_2H_4O)_2C_2H_5$ |
| 4 | H | H | $C_3H_6OC_4H_8OCOCH_3$ |
| 5 | $C_3H_6OCH_3$ | $C_2H_4OCH_3$ | $C_2H_4OCH_3$ |
| 6 | $CHCH_2OCOCH_3$<br>\|<br>$C_2H_5$ | $C_2H_4OCH_3$ | $C_2H_4OCH_3$ |
| 7 | $C_3H_6OCH_3$ | $C_2H_4OCOCH_3$ | $C_2H_5$ |
| 8 | $C_3H_6OC_2H_4OCH_3$ | H | H |
| 9 | $C_3H_6O(C_2H_4O)_2C_2H_5$ | H | H |
| 10 | $C_3H_6O(C_2H_4O)_2C_2H_5$ | $C_3H_6OCH_3$ | H |
| 11 | $C_3H_6O(C_2H_4O)_2CH_3$ | $C_6H_5$ | H |
| 12 | $C_3H_6O(C_2H_4O)_2CH_3$ | 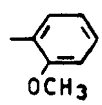 | H |
| 13 | $C_2H_5$ | $C_3H_6O(C_2H_4O)_2CH_3$ | H |
| 14 | $C_2H_5$ | $C_3H_6OC_4H_8OH$ | H |
| 15 | $C_2H_4OCH_3$ | $C_3H_6OC_4H_8OH$ | H |
| 16 | $C_3H_6OCH_3$ | $C_3H_6OC_4H_8OH$ | H |
| 17 | $C_3H_6OCOCH_3$ | $C_3H_6OC_2H_4OC_2H_5$ | H |

Tabelle 3

allgemeine Struktur:

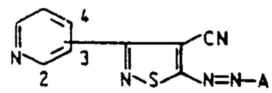

| Beispiele | X [1] | —A |
|---|---|---|
| 1 | 3 | 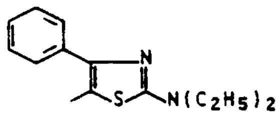 |
| 2 | 3 | 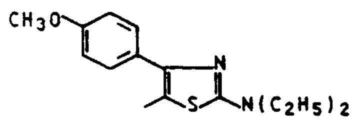 |
| 3 | 4 | 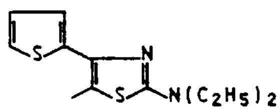 |
| 4 | 3 | 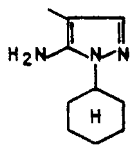 |
| 5 | 3 | 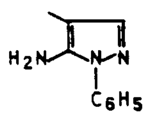 |
| 6 | 3 | 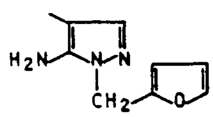 |
| 7 | 4 | 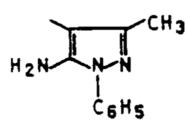 |
| 8 | 4 | 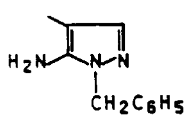 |

[1] X = Stellung der Pyridylgruppe

Die erfindungsgemäßen Verbindungen I sind nach an sich bekannten Methoden erhältlich. Insbesondere kann man ein Amin der allgemeinen Formel II

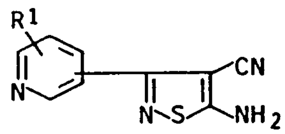

II,

diazotieren und mit einer Kupplungskomponente der Formel HA (III) umsetzen. Gut geeignete Kupplungskomponenten sind aus den Beispielen ersichtlich. Diese und ähnliche Kupplungskomponenten sind allgemein bekannt und u.a. in den folgenden Literaturstellen beschrieben:
J.M. Straley, in "The Chemistry of Synthetic Dyes", Vol. III, Ed. K. Venkatamaran, Academic Press, N.Y. (1970), H.R. Schwander, Dyes and Pigments 3 (1982), 133-160, BE-A-727 081, O. Annen et al, Rev. Progr. Coloration 17 (1987), 72-85. Die Amine II sind nach dem Verfahren der DE-A-38 04 394 zugänglich, indem man ein Nitril der allgemeinen Formel IV

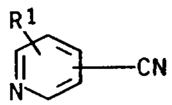

IV

in einem inerten organischen Verdünnungsmittel mit einem bis zu 6 C-Atomen tragenden Alkohol, $R^9$-OH, in Gegenwart von Chlorwasserstoff behandelt und das daraus resultierende Dihydrochlorid V

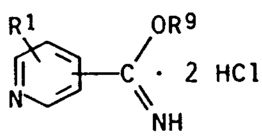

V

in einem inerten organischen Verdünnungsmittel mit Malodinitril in Gegenwart einer Base zum 3-Amino-2-cyanoacrylnitril-Derivat VI

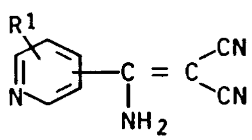

VI

umsetzt, daran anschließend in bekannter Weise Schwefelwasserstoff anlagert und einen oxidativen Ringschluß durchführt.

Die Diazotierung der schwach basischen Amine der allgemeinen Formel II erfordert hohe Säurekonzentrationen und wird bevorzugt in Anwesenheit von 85 bis 96 gew.%iger Schwefelsäure bei 0 bis 5°C durchgeführt. Dabei hat sich das Arbeiten mit Nitrosylschwefelsäure als Reagens bewährt. Im übrigen gehört die anschließende Kupplungsreaktion zu den Standardoperationen der präparativen Chemie, so daß nähere Erläuterungen hierzu entbehrlich sind.

Technische Bedeutung besitzen die neuen Verbindungen der Formel (I) und deren Mischungen als Farbstoffe zum Färben und Bedrucken von Substraten, welche mit Dispersionsfarbstoffen färbbar sind.

Sie eignen sich insbesondere in hervorragender Weise zur Färbung hydrophober Faserstoffe, z.B. besonders von Celluloseestern oder Polyestern, daneben aber auch von Polyamiden, Polyolefinen, Polyacrylaten und Polyvinylverbindungen. Mischgewebe aus Polyestern und Cellulosefasern lassen sich mit ihnen ebenso färben und bedrucken wie Folien aus den genannten Materialien.

Man erhält Färbungen mit guten bis sehr guten Echtheiten.

Besonders hervorzuheben sind dabei die hervorragende Lichtechtheit der Farbstoffe, insbesondere auf Polyestern, sowie ihre Thermofixierechtheit und Brillanz.

Man färbt die Polyesterfasern nach an sich bekannten Verfahren in Gegenwart von Carriern bei Temperaturen zwischen etwa 80 und 125°C oder vorzugsweise in Abwesenheit von Carriern unter Druck bei etwa 100 bis 140°C nach dem Ausziehverfahren.

Ferner kann man diese Fasern mit den wäßrigen Dispersionen der Verbindungen behandeln oder mit pastenförmigen Zubereitungen bedrucken und die erhaltene Imprägnierung bei etwa 140 bis 230 °C fixieren, z.B. mit Hilfe von Wasserdampf, Kontakthitze oder heißer Luft. Meist gibt man Dispergiermittel zu, die vorzugsweise anionisch oder nichtionogen sind und auch im Gemisch miteinander verwendet werden können.

Beispiel 1

5,05 g (0,025 mol) 5-Amino-4-cyano-3-(3′-pyridyl)isothiazol wurden in 50 ml Eisessig/Propionsäure (Volumenverhältnis 3:1) und 10 ml 85 gew.%iger Schwefelsäure gelöst. Bei 0 bis 5 °C wurden 8,2 g Nitrosylschwefelsäure (11,5 Gew.% $N_2O_3$) zugetropft. Anschließend wurde das Gemisch 4 Stunden lang bei 0 bis 5 °C gerührt.

Eine Lösung aus 7,12 g (0,026 mol) N-β-Acetoxyethyl-N-benzylanilin und 50 ml N,N-Dimethylformamid wurde mit 0,5 g Amidosulfonsäure und 100 g Eis und danach innerhalb von 20 Minuten mit der Diazoniumsalzlösung sowie mit 300 g Eis versetzt.

Nach beendeter Kupplung wurde die Farbstoffsuspension filtriert, der Filterkuchen mit Wasser neutral gewaschen und getrocknet. Es wurden 8,5 g des Farbstoffs der Formel

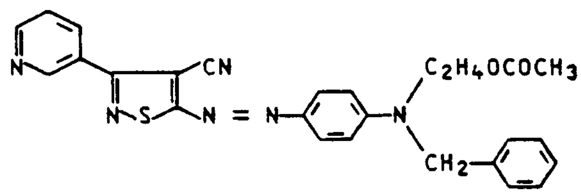

erhalten, der Polyester in klaren roten Nuancen mit sehr guten Echtheiten färbt.

Ausbeute: 71 % der Theorie
Smp.: 89-92 °C
$\lambda_{max}(CH_2Cl_2)$: 525 nm

Beispiel 2

Die Diazoniumsalzlösung gemäß Beispiel 1 wurde innerhalb von 30 min unter Rühren zu einer Mischung aus 5,3 g (0,026 mol) N-Butyl-N-β-cyanoethyl-anilin, 0,5 g Amidosulfonsäure und 100 g Eis gegeben.

Dabei wurde die Temperatur durch Zugabe von weiteren 200 g Eis auf 0 bis 5 °C gehalten. Nach beendeter Kupplung wurde in üblicher Weise aufgearbeitet.

Man erhielt 9,0 g des Farbstoffs der Formel

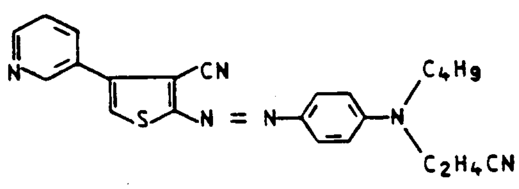

der Polyestermaterial in roten Nuancen mit hervorragender Echtheit färbt.

Ausbeute: 87 % der Theorie
$\lambda_{max}(CH_2Cl_2)$: 532 nm

Beispiel 3

8,1 g (0,041 mol) 5-Amino-4-cyano-3-(3′-pyridyl)-isothiazol wurden in 70,1 g 96 gew.%iger Schwefelsäure und 42,4 g Eis bei max. 35 °C gelöst. Bei max. 5 °C wurden 13,2 g Nitrosylschwefelsäure zugetropft, wonach noch 3 Stunden bei 0 bis 5 °C gerührt wurde.

11,3 g (0,047 mol) 2-N,N-Diethylamino-4-(2′-thienyl)thiazol, gelöst in 50 ml N,N-Dimethylformamid, wurden in 300 g Eis und 0,5 g Amidosulfonsäure vorgelegt und innerhalb von 10 min bei max. 5 °C mit der Diazoniumsalzlösung vesetzt. Die übliche Aufarbeitung des Reaktionsgemisches lieferte 17,3 g des Farb-

stoffs der Formel

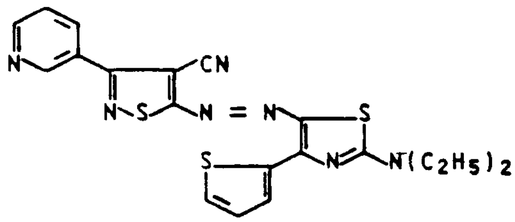

der Polyester in echten, blauen Tönen färbt.

Ausbeute: 94 % der Theorie
Smp.: 187-194 °C.

Beispiel 4

Arbeitet man wie in Beispiel 3 beschrieben und setzt als Kupplungskomponente 7,1 g (0,041 mol) 5-Amino-1-benzyl-pyrazol ein, so erhält man 12,7 g des Farbstoffs der Formel

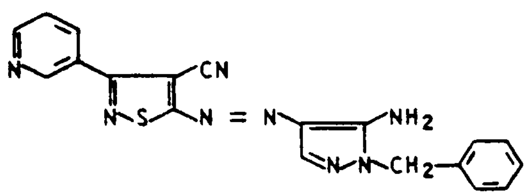

der Polyester in goldgelben Tönen färbt.

Ausbeute: 80 % der Theorie
Smp.: 255-257 °C.

Beispiel 5

In eine Lösung von 208 g Nicotinsäurenitril und 170 g 2-Chlorethanol in 1 l Chloroform wurden bei einer Temperatur von 0 bis 5 °C 200 g gasförmiger Chlorwasserstoff eingeleitet. Danach wurde noch 2 h bei 10 °C gerührt. Anschließend wurde der überschüssige Chlorwasserstoff abgesaugt und die ausgefallenen Kristalle abfiltriert. Man erhielt 492 g des Dihydrochlorids

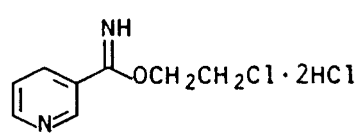

Smp.: 238 bis 240 °C

| Analyse: $C_8H_{11}Cl_3N_2O$ (257,5) | | |
|---|---|---|
| ber.: | Cl 41,4 Gew.-% | $Cl^{\ominus}$ 27,6 Gew.-% |
| gef.: | Cl 40,7 Gew.-% | $Cl^{\ominus}$ 27,6 Gew.-% |

Anschließend wurde eine bei 5 bis 10 °C hergestellte Mischung aus 257,5 g des erhaltenen Dihydrochlorids und 500 ml Methanol mit 225 g Triethylamin sowie 66 g Malodinitril versetzt und 4 h unter Rückfluß gehalten. Danach wurde das Methanol mit Wasserdampf abdestilliert, die sich beim Erkalten bildende Suspension abfiltriert und der Filterkuchen mit Wasser gewaschen und getrocknet.

Man erhielt 121 g des 3-Amino-2-cyanoacrylnitril-Derivats

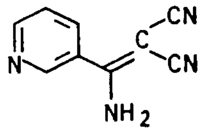

Smp.: 216 bis 217 ° C (aus Ethanol)

| Analyse: $C_9H_6N_4$ (170) | | | |
|---|---|---|---|
| ber.: | C 63,5 Gew.-% | H 3,6 Gew.-% | N 32,9 Gew.-% |
| gef.: | C 63,7 Gew.-% | H 3,7 Gew.-% | N 33,0 Gew.-%. |

Zu einer Lösung von 170 g des erhaltenen 3-Amino-2-cyanoacrylnitril-Derivatsin 450 ml N-Methylpyrrolidon wurden 110 g Triethylamin und anschließend 40 g gasförmiger Schwefelwasserstoff eingeleitet. Die entstandene Mischung wurde in 1,2 l Wasser überführt. Dann wurde mit Essigsäure neutralisiert und der angefallene Niederschlag abfiltriert und getrocknet. Man erhielt 191 g der schwefelhaltigen Verbindung

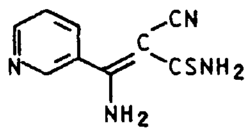

Smp.: 185 bis 186 ° C (aus Pentanol).

Ein Gemisch aus 1 l Methanol und 204 g der erhaltenen schwefelhaltigen Verbindung wurde unter Rückfluß versetzt. Anschließend wurden 150 g einer 30 gew.-%igen wäßrigen Wasserstoffperoxidlösung so zugetropft, daß der Rückfluß des Reaktionsgemisches ohne äußere Wärmezufuhr erhalten blieb. Danach wurde der Rückfluß noch 1 h durch äußere Wärmezufuhr aufrechterhalten. Dann wurde mit 2 l Wasser verdünnt und abfiltriert. Man erhielt 187 g der Verbindung

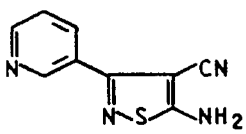

Smp.: 218 bis 219 ° C (aus Ethanol)

| Analyse: $C_9H_8N_4S$ (202) | | | |
|---|---|---|---|
| ber.: | C 53,4 Gew.-% | H 3,0 Gew.-% | N 27,7 Gew.-% |
| gef.: | C 53,4 Gew.-% | H 3,1 Gew.-% | N 27,6 Gew.-%. |
| ber.: | S 15,8 Gew.-% | | |
| gef.: | S 15,7 Gew.-% | | |

## Patentansprüche

**1.** Isothiazolazofarbstoffe der allgemeinen Formel I

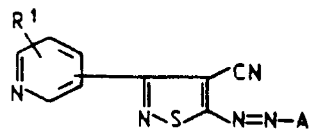

I,

in der $R^1$ Wasserstoff, Halogen, eine $C_1$-$C_4$-Alkyl- oder eine $C_1$-$C_4$-Alkoxygruppe bedeutet und A für den Rest einer Kupplungskomponente steht.

**2.** Isothiazolazofarbstoffe nach Anspruch 1, in denen die Kupplungskomponente A für einen der folgenden Reste $A^1$-$A^5$

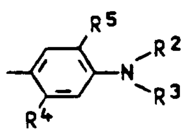

$A^1$

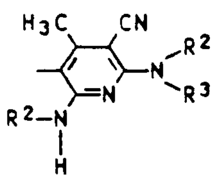

$A^2$

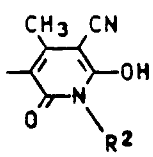

$A^3$

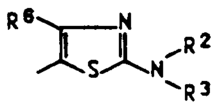

$A^4$

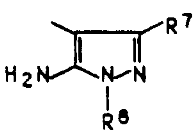

$A^5$

steht, wobei die Substituenten folgende Bedeutung haben können:

$R^2$, $R^3$ Wasserstoff, $C_1$-$C_{12}$-Alkyl, das durch ein oder zwei Sauerstoffatome unterbrochen sein und/oder ein bis zwei Substituenten aus der Reihe $C_1$-$C_8$-Alkoxycarbonyl, dessen Alkylkette durch ein oder zwei Sauerstoffatome unterbrochen sein kann, Cyano, Hydroxy, $C_1$-$C_4$-Alkanoyloxy, Benzoyloxy, oder Phenoxy tragen kann, $C_3$-$C_5$-Alkenyl, $C_5$-$C_7$-Cycloalkyl oder Phenyl, wobei letzteres mit Chlor, Methyl, Methoxy, Dimethylamino oder Acetylamino ein- bis zweifach substituiert sein kann;

$R^4$ Wasserstoff, $C_1$-$C_4$-Alkyl, $C_1$-$C_4$-Alkoxy oder Chlor, $C_1$-$C_4$-Alkanoylamino, das mit $C_1$-$C_4$-Alkoxy, Phenoxy oder Chlor substituiert sein kann, Ureido, $C_1$-$C_4$-Mono- bzw. Dialkylureido oder $C_1$-$C_4$-Alkylsulfonylamino;

$R^5$ Wasserstoff, $C_1$-$C_4$-Alkyl, $C_1$-$C_4$-Alkoxy oder Chlor;

$R^6$ Wasserstoff, $C_1$-$C_9$-Alkyl, Phenyl, Furyl, Thienyl oder Pyridyl, wobei die vier letztgenannten Reste bis zu zwei Methyl-, Methoxy-, Acetylamino- und/oder Dimethylaminogruppen und/oder Chlor tragen können;

$R^7$ Wasserstoff, $C_1$-$C_4$-Alkyl oder Phenyl;

$R^8$ Wasserstoff, $C_1$-$C_6$-Alkyl, das ein bis zweifach mit Phenyl, Furyl oder Thienyl substituiert sein kann, $C_5$-$C_7$-Cycloalkyl oder Phenyl.

3. Isothiazolazofarbstoffe nach den Ansprüchen 1 oder 2, in denen $R^1$ für Wasserstoff steht.

4. 5-Amino-4-cyano-3-pyridyl-isothiazole der allgemeinen Formel II

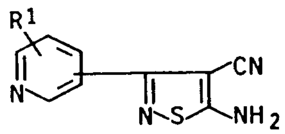

II.

in der $R^1$ Wasserstoff, Halogen, eine $C_1$-$C_4$-Alkyl- oder eine $C_1$-$C_4$-Alkoxylgruppe bedeutet.

5. Verfahren zur Herstellung der Isothiazolazofarbstoffe I gemäß Anspruch 1, dadurch gekennzeichnet, daß man ein Amin II gemäß Anspruch 4 diazotiert und mit einer Kupplungskomponente HA (III) umsetzt.

6. Verwendung der Isothiazolazofarbstoffe I gemäß den Ansprüchen 1 bis 3 zum Färben und Bedrucken von Substraten, welche mit Dispersionsfarbstoffen färbbar sind.

7. Verfahren zum Färben von hydrophoben oder weitgehend hydrophoben organischen Fasern oder Fasermaterialien nach der für Dispersionsfarbstoffe bekannten Färbetechnik, dadurch gekennzeichnet, daß man hierzu die Farbstoffe I gemäß den Ansprüchen 1 bis 3 verwendet.

8. Farbstoffzubereitungen für das Färben und Bedrucken von Substraten nach der Technik des Färbens bzw. Bedruckens mit Dispersionsfarbstoffen, enthaltend als Farbstoff einen der Farbstoffe gemäß den Ansprüchen 1 bis 3.

## Claims

1. An isothiazoleazo dye of the general formula I

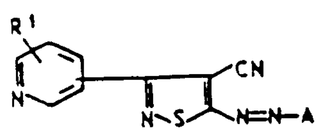

I

where $R^1$ is hydrogen, halogen, $C_1$-$C_4$-alkyl or $C_1$-$C_4$-alkoxy and A is the radical of a coupling component.

2. An isothiazoleazo dye as claimed in claim 1, where the coupling component A is one of the following radicals $A^1$-$A^5$:

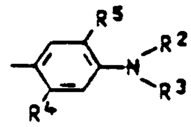

$A^1$

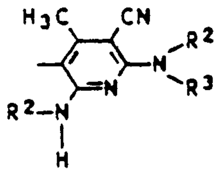

$A^2$

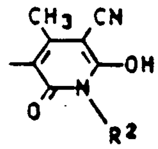

$A^3$

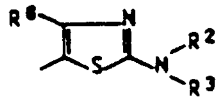

$A^4$

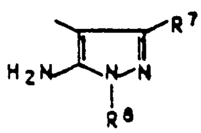

$A^5$

where the substituents are defined as follows:

| | |
|---|---|
| $R^2$ and R3 | are each hydrogen, $C_1$-$C_{12}$-alkyl, which may be interrupted by one or two oxygen atoms and/or may carry one or two substituents from the series consisting of $C_1$-$C_8$-alkoxycarbonyl, whose alkyl chain may be interrupted by one or two oxygen atoms, cyano, hydroxyl, $C_1$-$C_4$-alkanoyloxy, benzoyloxy and phenoxy, $C_3$-$C_5$-alkenyl, $C_5$-$C_7$-cycloalkyl or unsubstituted or chlorine-, methyl-, methoxy-, dimethylamino- or acetylamino- monosubstituted or disubstituted phenyl, |
| $R^4$ | is hydrogen, $C_1$-$C_4$-alkyl, $C_1$-$C_4$-alkoxy, chlorine, $C_1$-$C_4$-alkanoylamino, which may be substituted by $C_1$-$C_4$-alkoxy, phenoxy or chlorine, ureido, $C_1$-$C_4$-mono- or -dialkylureido, or $C_1$-$C_4$-alkylsulfonylamino, |
| $R^5$ | is hydrogen, $C_1$-$C_4$-alkyl, $C_1$-$C_4$-alkoxy or chlorine, |
| $R^6$ | is hydrogen, $C_1$-$C_9$-alkyl, phenyl, furyl, thienyl or pyridyl, the last four of which may carry up to two methyl, methoxy, acetylamino and/or dimethylamino groups and/or chlorine, |
| $R^7$ | is hydrogen, $C_1$-$C_4$-alkyl or phenyl, |
| $R^8$ | is hydrogen, $C_1$-$C_6$-alkyl, which may be monosubstituted or disubstituted by phenyl, furyl or thienyl, $C_5$-$C_7$-cycloalkyl or phenyl. |

**3.** An isothiazoleazo dye as claimed in claim 1 or 2, where $R^1$ is hydrogen.

**4.** A 5-amino-4-cyano-3-pyridylisothiazole of the general formula II

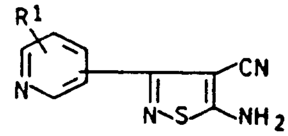

II

Where $R^1$ is hydrogen, halogen, $C_1$-$C_4$-alkyl or $C_1$-$C_4$-alkoxy.

**5.** A process for preparing an isothiazoleazo dye I as claimed in claim 1, which comprises diazotizing an

amine II as claimed in claim 4 and reacting it with a coupling component HA(III).

6. Use of an isothiazoleazo dye I as claimed in any of claims 1 to 3 for dyeing and printing substrates which can be dyed with disperse dyes.

7. A process for dyeing hydrophobic or substantially hydrophobic organic fibers or fiber materials by the dyeing technique for disperse dyes, which comprises using a dye I as claimed in any of claims 1 to 3 for this purpose.

8. A dye formulation for dyeing and printing substrates by the dyeing or printing technique for disperse dyes, containing a dye as claimed in any of claims 1 to 3.

**Revendications**

1. Colorants azoïques de la série des isothiazoles de formule générale I

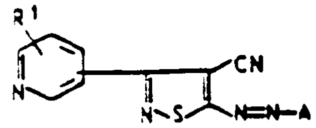

I,

dans laquelle $R^1$ représente un atome d'hydrogène ou d'halogène ou un groupement alkyle en $C_1$-$C_4$ ou alcoxy en $C_1$-$C_4$ et A est mis pour le reste d'un composant de copulation.

2. Colorants azoïques de la série des isothiazoles selon la revendication 1, dans lesquels le composant de copulation A est mis pour l'un des restes $A^1$-$A^5$ suivants

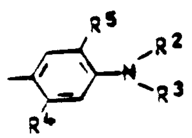

$A^1$

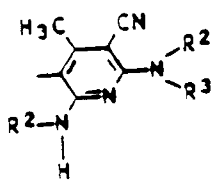

$A^2$

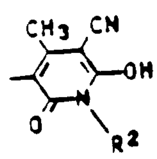

$A^3$

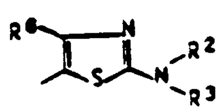

$A^4$

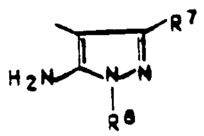

$A^5$

les substituants pouvant avoir les significations suivantes:

$R^2$, $R^3$: atome d'hydrogène, groupement alkyle en $C_1$-$C_{12}$, qui peut être interrompu par un ou deux atomes d'oxygène et/ou peut porter un ou deux substituants de la série des restes alcoxycarbonyle en $C_1$-$C_8$ - dont la chaîne alkyle peut être interrompue par un ou deux atomes d'oxygène -, cyano, hydroxy, alcanoyloxy en $C_1$-$C_4$, benzoyloxy ou phénoxy, groupement alcényle en $C_3$-$C_5$, cycloalkyle en $C_5$-$C_7$ ou phényle, ce dernier pouvant être substitué une ou deux fois par des atomes de chlore ou des restes méthyle, méthoxy, diméthylamino ou acétylamino.

$R^4$: atome d'hydrogène, groupement alkyle en $C_1$-$C_4$, alcoxy en $C_1$-$C_4$ ou atome de chlore, groupement alcanoylamino en $C_1$-$C_4$ qui peut être substitué par un reste alcoxy en $C_1$-$C_4$, phénoxy ou par un atome de chlore, groupement uréido, mono- ou dialkyluréido en $C_1$-$C_4$ ou alkylsulfonylamino en $C_1$-$C_4$;

$R^5$: atome d'hydrogène, groupement alkyle en $C_1$-$C_4$, alcoxy en $C_1$-$C_4$ ou atome de chlore;

$R^6$: atome d'hydrogène, groupement alkyle en $C_1$-$C_9$, phényle, furyle, thiényle ou pyridyle, ces quatre derniers restes pouvant porter jusqu'à deux groupements méthyle, méthoxy, acétylamino et/ou diméthylamino et/ou atomes de chlore;

$R^7$: atome d'hydrogène, groupement alkyle en $C_1$-$C_4$ ou phényle;

$R^8$: atome d'hydrogène, groupement alkyle en $C_1$-$C_6$ qui peut être substitué une ou deux fois par des restes phényle, furyle ou thiényle, groupement cycloalkyle en $C_5$-$C_7$ ou phényle.

**3.** Colorants azoïques de la série des isothiazoles selon la revendication 1 ou 2, dans lesquels $R^1$ est mis pour un atome d'hydrogène.

**4.** 5-Amino-4-cyano-3-pyridyl-isothiazoles de formule générale II

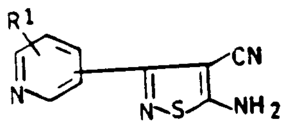

II.

dans laquelle $R^1$ est mis pour un atome d'hydrogène ou d'halogène ou pour un groupement alkyle en $C_1$-$C_4$ ou alcoxy en $C_1$-$C_4$.

**5.** Procédé de préparation des colorants azoïques de la série des isothiazoles I selon la revendication 1, caractérisé en ce qu'on diazote une amine II selon la revendication 4 et on la fait réagir avec un composant de copulation HA (III).

**6.** Utilisation des colorants azoïques de la série des isothiazoles selon l'une quelconque des revendications 1 à 3 pour la teinture et l'impression de substrats qui sont colorables avec des colorants de dispersion.

**7.** Procédé de teinture de fibres ou de matières fibreuses organiques hydrophobes, au moins dans une large mesure, par la technique de teinture connue pour les colorants de dispersion, caractérisé en ce qu'on utilise à cet effet les colorants I selon l'une quelconque des revendications 1 à 3.

**8.** Préparations de colorants pour la teinture et l'impression de substrats suivant la technique de teinture ou d'impression avec des colorants de dispersion, ces préparations contenant, en tant que colorant, l'un des colorants selon l'une quelconque des revendications 1 à 3.